# EUROPÄISCHE PATENTSCHRIFT

(11) **EP 1 776 531 B1**
(45) Veröffentlichungstag und Bekanntmachung des Hinweises auf die Patenterteilung: **05.03.2008**
(21) Anmeldenummer: 05770019.7
(22) Anmeldetag: 03.08.2005
(51) Int. Cl.: F16D 65/38, F16D 65/56, F16D 65/14

(54) **NACHSTELLVORRICHTUNG FÜR EINE PNEUMATISCH BETÄTIGTE SCHEIBENBREMSE**
ADJUSTING DEVICE FOR A PNEUMATIC DISC BRAKE
DISPOSITIF DE REGLAGE POUR UN FREIN A DISQUE A ACTIONNEMENT PNEUMATIQUE

(30) Priorität: 04.08.2004 DE 102004037771
(43) Veröffentlichungstag der Anmeldung: 25.04.2007
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2005/008403
(87) Internationale Veröffentlichungsnummer: WO 2006/015782

(56) Entgegenhaltungen:
- EP-A- 0 614 025
- DE-C1- 19 729 024
- US-A- 4 429 768
- US-A- 5 443 141

## Beschreibung

Die Erfindung betrifft eine Nachstellvorrichtung für eine pneumatisch betätigte Scheibenbremse nach dem Oberbegriff des Anspruchs 1.

Eine erste Nachstellvorrichtung ist aus der DE 40 34 165 bekannt, wobei auf diese Schrift vollinhaltlich Bezug genommen wird. Insbesondere eignet sich die Nachstellvorrichtung der Erfindung ebenfalls für eine druckluftbetätigte Scheibenbremse, insbesondere in Schiebesattelausführung, wie sie in dieser Schrift dargestellt ist. Darüber hinaus ist sie aber auch in druckluftbetätigten Fest- oder Schwenksattelscheibenbremsen einsetzbar.

Pneumatisch betätigte Schreibenbremsen dieser Art gehören mittlerweile zur Standardausrüstung schwerer Nutzfahrzeuge, wo sie mehr und mehr die früher üblichen Trommelbremsen ersetzen.

Derartige Scheibenbremsen benötigen zur Erzeugung der geforderten Zuspannkraft eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10 : 1 und 20 : 1, die beim gattungsgemäßen Stand der Technik mittels eines exzentrisch gelagerten Drehhebels realisiert werden.

Die Kolbenhübe der Bremszylinder bewegen sich zwischen 50 und 75 mm, damit ergeben sich Zuspannwege zum Andrücken der Bremsbeläge an die Bremsscheibe von etwa 4 mm.

Die Reibmaterialdicke der Bremsbeläge liegt im Bereich von 20 mm. Da zwei Beläge eingebaut sind, ergibt sich somit ohne Berücksichtigung des Scheibenverschleißes ein Verschleißweg von etwa 40 mm. Dieser Weg ist um ein Vielfaches größer als der o.a. Zuspannweg. Es besteht daher die Notwendigkeit die Bremse mittels einer Vorrichtung, dem Belagverschleiß entsprechend, nachzustellen.

Die DE 40 34 165 A1 erreicht dies mittels einer automatisch arbeitenden Verschleißnachstellung mit einem Freilauf und einer Überlastkupplung (siehe z.B. Fig. 5 dieser Schrift). Damit wird erreicht, daß das sog. Lüftspiel, damit ist der Spalt zwischen den Bremsbelägen und der Bremsscheibe im unbetätigten zustand gemeint, unabhängig vom Verschleißzustand und Verschleißverhalten der Bremsbeläge, konstant gehalten wird.

Die DE 40 34 165 A1 schlägt weiter vor, die Nachstellvorrichtung konzentrisch im Hohlraum eines Gewindestempels - einer Gewindespindel - anzuordnen und exzentrisch über ein Antriebselement (Schaltfinger) vom Bremshebel anzutreiben.

Beim Bremsen führt der mit der Kolbenstange des Bremszylinders gekoppelte Bremshebel eine Drehbewegung aus. Bevor über den Koppelmechanismus der Nachstellung (z.B. Schaltgabel und Schaltfinger) die Drehbewegung des Drehhebels in die Nachstellvorrichtung eingeleitet wird, muß ein sog. Leerweg überwunden werden. Dieser Weg ist für die Größe des Lüftspiels ausschlaggebend, da während dieser Bewegung die Nachstellung nicht aktiviert wird und der Weg der Druckkolben damit das Lüftspiel darstellt. Nach Überwinden dieses Leerwegs wird der Nachstellvorrichtung in eine Drehbewegung versetzt und durch die Koppelung mit dem Gewinderohr ein Nachstellvorgang eingeleitet.

Dies ist jedoch nur dann der Fall, wenn das Lüftspiel zu groß ist. Hat das Lüftspiel die korrekte Größe, findet zeitgleich mit dem Anlegen der Schaltfinger an die Schaltgabel der Nachstellvorrichtung, das Anlegen der Bremsbeläge an die Bremsscheibe statt und eine Verdrehung des Gewinderohrs ist wegen der dadurch hervorgerufenen hohen Reibkraft im Gewinde nicht mehr möglich.

Trotzdem wird der Bremshebel, bedingt durch die Verformung der im Kraftfluß befindlichen Bauteiles (Beläge, Sattel, Mechanik) weitergedreht und wegen der direkten Kopplung der Schaltgabel mit dem Bremshebel wird auch am Nachstellvorrichtung weiterhin eine Drehbewegung eingeleitet.

Damit am Nachstellvorrichtung keine Beschädigung auftritt, muß dieser mit der genannten Überlastkupplung ausgestattet sein. Im Falle des gattungsgemäßen Standes der Technik (Fig. 5 der gattungsgemäßen Schrift) wird das durch eine Kugelrampenkupplung, die bei Überschreitung eines bestimmten Drehmoments ausrastet, gewährleistet.

Ein weiteres grundlegendes Bauteil der Nachstellvorrichtung ist die Richtungskopplung, im Falle des vorstehend beschrieben Nachstellvorrichtung ein sog. Klemmrollenfreilauf. Durch diesen Freilauf wird erreicht, daß der Nachstellvorrichtung nur in Zustellrichtung vom Bremshebel verdreht werden kann.

Beim Belagwechsel muß die Verschleißnachstellung wieder in die Anfangsstellung zurückgedreht werden. Beim Zurückstellen muß der Nachstellvorrichtung gegen die Sperrichtung des Freilaufs gedreht werden, was durch die Überlastkupplung, die bei einem bestimmten Drehmoment ausrastet, ermöglicht wird. Durch die "Überrollfunktion" ist ein unbegrenzter Rückdrehwinkel möglich.

Die vorher beschriebene Nachstellvorrichtung verfügt neben anderen Bauteilen daher unbedingt über einen Klemmrollenfreilauf und eine Überlastkupplung. Der Klemmrollenfreilauf benötigt zur sicheren Funktion eine sehr genau gefertigte Gegenlauffläche und einen präzise gefertigten Presssitz.

In der gattungsgemäßen DE 197 29 024 C1 wurde daher vorgeschlagen, die Einwegdrehkupplung und die Überlastkupplung zu einem kombinierten Einweg-Dreh- und Überlastkupplungssystem zusammenzufassen. Dennoch besteht der Bedarf nach einer weiteren Senkung der Herstellkosten auch dieser Lösung.

Vor diesem Hintergrund ist es die Aufgabe der Erfindung, die gattungsgemäße Nachstellvorrichtung derart weiterzuentwickeln, dass sie durch möglichst wenig Bauteile und mit einem geringen Bearbeitungsaufwand kostengünstig herstellbar ist. Vorzugsweise wird ergänzend auch eine Funktions- und Lebensdaueroptimierung angestrebt.

Die Erfindung löst diese Aufgabe durch den Gegenstand des Anspruchs 1.

Vorteilhafte Ausgestaltungen der Erfindung sind in den Unteransprüchen angegeben.

Grundprinzip der Nachstellvorrichtung ist wiederum eine Kombination des Freilaufs und der Überlastkupplung in einer Funktionseinheit, die hier aber besonders kostengünstig, robust und funktionssicher - insbesondere durch einen Kegelsitz als preiswertes und ausfallsicheres Funktionselement - ausgestaltet ist.

Nachfolgend wird die Erfindung unter Bezug auf die Zeichnung anhand eines bevorzugten Ausführungsbeispiels näher beschrieben. Es zeigt:

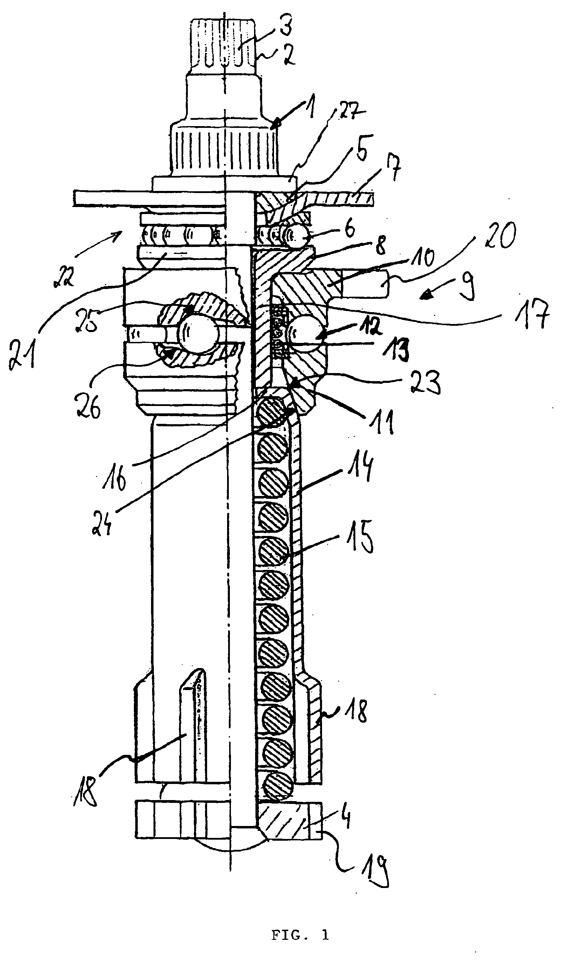

Fig. 1 einen Schnitt durch einen erfindungsgemäße Nachstellvorrichtung.

Fig. 1 zeigt eine Nachstellvorrichtung, die wie die Nachstellvorrichtungen der DE 197 29 024 C1 in eine umgebende hohle Drehspindel einsetzbar ist, relativ zu der sie zwar axial verschiebbar aber relativ unverdrehbar ist.

Die Nachstellvorrichtung weist eine zentrische, als Achse dienende und sich über die gesamte Länge der Nachstellvorrichtung erstreckende Spindel 1 auf. Diese endet an ihrem aus der Drehspindel und dem Bremssattel nach außen vorstehenden Bereich in einem Antriebszapfen 2 mit einer Profilierung 3, der es erlaubt, die Spindel 1 bei einem Belagwechsel zurück zu drehen, um die Drehspindel für einen Belagwechsel um das Verschleißmaß der Bremsbeläge zurückzustellen.

Am gegenüberliegenden Ende der Spindel 1 ist ein Mitnehmerstern 4 angeordnet, der zum Eingriff in eine sich axial erstreckende Innenprofilierung - wenigstens eine Nut - der umgebenden Drehspindel (hier nicht dargestellt) ausgelegt ist, so dass bei Drehungen der Spindel 1 und des daran befestigten Mitnehmersterns 4 die umgebende innen hohle Drehspindel, die in einem weiteren Bauelement wie einer Brücke verschraubt ist, mitgedreht wird, so dass sie sich axial parallel zur Bremsscheibenachse bewegt und zum Nachstellen von Bremsbelagverschleiß einen Bremsbelag axial in Richtung der Bremsscheibe vorschiebt.

An den Antriebszapfen 2 schließt sich ein Bund 27 der Spindel an, an der einer Lagerbuchse 5 abgestützt ist, die an ihrer vom Bund 27 abgewandten Seite konkav geformt ist und eine kardanische Lagerscheibe 7 trägt.

Die Lagerscheibe dient als die eine Lagerbuchse einer ersten Wälzlageranordnung 22, eines Wälzlagers, insbesondere Kugellagers, mit Lagerelementen, insbesondere Kugeln 6, dessen weitere Lagerbuchse als Distanzhülse 8 mit einem Bund 21 und einem zylindrischen Ansatz 17 mit relativ zum Bund 21 kleineren Durchmesser ausgestaltet ist.

Die Distanzhülse 8 durchgreift mit ihrem Ansatz 17 eine weitere Wälzlageranordnung, eine kombinierte Freilauf- und Überlastkupplungseinrichtung 9, die zwei Kupplungsbuchsen 10, 11 aufweist, welche als Kupplungsbuchsen einer Kugelrampenkupplung mit Lagerelementen, insbesondere mit Kugeln 12 dienen, wobei konzentrisch innen zur Kugelrampenkupplung und den Kugeln sowie hier konzentrisch außen zu einem zylindrischen Ansatz 17 der Distanzhülse 8 eine Drehfeder 13 zwischen den beiden Kupplungsbuchsen 10, 11 sitzt und diese verbindet.

Die antriebsseitige Kupplungsbuchse 10 trägt einen Antriebsansatz 20, z.B. schaltgabelartig, in den beispielsweise ein Ansatz des Drehhebels der Scheibenbremse angreift, um bei Bremsungen einen Antrieb der Nachstellvorrichtung zu realisieren.

Die abtriebsseitige Kupplungsbuchse 11 stützt sich dagegen über einen inneren Kegelsitz 23 an einem Außenkegel 24 einer Federhülse 14 ab, die eine Vorspannfeder 15 aufnimmt, die mit einem Ende an dem Mitnehmerstern 4 und mit ihrem anderen Ende in einem axialen Endbereich 16 der Federhülse 14 abgestützt ist.

Damit werden die Freilauffunktion und die Überlastkupplung bauraumgünstig optimiert zusammengefasst, wobei aber die volle Funktion des Freilaufes und der Überlastkupplung einwandfrei erhalten bleibt.

Die Federhülse 14 weist in ihrem zum Mitnehmerstern gewandten Bereich eine Außenprofilierung 18 auf, welche wie die Außenprofilierung 19 des Mitnehmersterns 4 geformt ist und ebenfalls in die Innennuten der umgebenden Drehspindel eingreift.

Nachfolgend sei näher die Funktion dieser Nachstellvorrichtung beschrieben.

Die vorgespannte Vorspannfeder 15 drückt die Federhülse 14 mit der Stirnseite gegen die Distanzhülse 8.

Die Länge der Distanzhülse 8 ist derart bestimmt, daß die Kugeln 6 und die Kupplungsbuchsen 10, 11 im Ruhezustand der Nachstellvorrichtung nicht von der Federkraft beaufschlagt werden.

Das Spiel in der Kupplung wird durch die Drehfeder 13, welche die beiden Kupplungshälften bzw. Kupplungsbuchsen 10, 11 in Sperrrichtung verdreht, ausgeglichen. Dadurch wird erreicht, daß Fertigungstoleranzen für das Ansprechverhalten der Überlastkupplung keinen Einfluss haben und das ein exaktes, verzögerungsfreies Ansprechen des Nachstellvorrichtung gewährleistet wird.

Im Ruhezustand wird die Kraft der Vorspannfeder 15 von der Federhülse 14 stirnseitig in die Distanzhülse 8 und von dieser über das erste Wälzlager 22, vorzugsweise ein Axialkugellager, in die kardanisch geformte Lagerscheibe 7 geleitet. Der Kraftfluß wird schließlich über die konvex geformte Lagerbuchse 5 in die Nachstellvorrichtungsachse geleitet und über den Mitnehmerstern 4 am anderen Ende der Achse bzw. Spindel 1 geschlossen.

Nach Überwindung des vorher beschriebenen Leerwegs wird die Drehbewegung des Hebels der Scheibenbremse an dem Antriebselement 20 (z.B. eine von einem Zapfen des Drehhebels angetriebene Schaltgabel) in die Nachstellvorrichtung eingeleitet.

Vom Antriebselement 20 wird die Bewegung an die hier einstückig angeformte antriebsseitige Kupplungsbuchse 10 übertragen.

Diese überträgt die Bewegung an die Kugeln 12, die jeweils an- und abtriebsseitig in jeweils in rampenförmigen Laufbahnen 25, 26 gelagert sind.

Da die beiden Kupplungshälften 10, 11 über die Drehfeder 13 zueinander vorgespannt sind, werden sie axial auseinandergedrückt.

Dabei wird die abtriebsseitige Kupplungsbuchse 11 mit dem angeformten inneren Kegelsitz 23 gegen den Außenkegel 24 der Federhülse 14 und die antriebsseitige Kupplungsbuchse 10 mit der Stirnseite gegen den Bund 21 der Distanzbuchse 8 gedrückt.

Das Reibmoment dieser Kegelkupplung ist so abgestimmt, daß im Zusammenspiel mit der Kugelrampengeometrie der beiden Kupplungsbuchsen Selbsthemmung vorhanden ist.

Damit wird gewährleistet, daß die Drehbewegung vom Antriebselement über die beiden Kupplungsbuchsen 10, 11 dem Kegelsitz (Elemente 23, 24) und die Federhülse 14 in das Gewinderohr bzw. die umgebenden Gewindespindel eingeleitet wird und ein Nachstellvorgang durchgeführt wird.

Weiterhin ist gewährleistet, daß beim Blockieren des Gewinderohrs beim Anliegen der Beläge an der Bremsscheibe die beiden Kupplungsbuchsen 10, 11 gegen die Kraft der Vorspannfeder 15 auseinandergedrückt werden können und die Überlastschutzfunktion bzw. Überlastkupplungsfunktion gegeben ist.

Über die Höhe der Vorspannfederkraft und dem Steigungswinkel der Kugelrampenlaufbahnen 25, 26 kann auf einfache Weise das Ansprechmoment der Überlastfunktion genau eingestellt werden.

Für die Funktion ist es notwendig, daß das Ansprechmoment der Überlastfunktion eine bestimmte Größenordnung besitzt. Um die Antriebselemente zu schonen, ist es günstig, wenn nach dem Ansprechen der Überlastfunktion das weitere Rollmoment abnimmt. Dies lässt sich sehr einfach eindeutig durch unterschiedliche Steigungswinkel der Kugelrampenlaufbahnen 24, 25 darstellen.

Die Freilauffunktion, welche notwendig ist, um den Belagverschleiß auszugleichen, ist dadurch gegeben, daß beim Zurückdrehen die Kugeln auf der Rampenkontur der Laufbahnen 24, 25 ablaufend bewegt werden und keine Sperrung der Kupplungsbuchsen 10, 11 - in Verbindung mit dem Kegelsitz - möglich ist.

Durch die Verspannung mit der Drehfeder 13 werden die beiden Kupplungshälften 10, 11 nur soweit geöffnet, bis der Kraftschluß im Kegelsitz kleiner ist als die Kraft der quasi gegenwirkenden Drehfeder 13.

Auf diese Weise wird erreicht, daß die Freilauffunktion praktisch spielfrei ist und somit ein sehr direktes und exaktes Ansprechen erzielt wird.

Eine weitere Anforderung an den Nachstellvorrichtung ist die Möglichkeit des Zurückdrehens entgegen der Sperrwirkung des Freilaufs beim Belagwechsel. Diese Funktion wird auf folgende Weise erreicht:

Beim Zurückdrehen werden die Kupplungshälften 10, 11 soweit auseinandergedrückt, bis die Kugeln 12 das Ende der Kugelrampenlaufbahn erreichen. Dabei ändert sich der Steigungswinkel der Kugelrampenlaufbahnen 25, 26 derart bzw. so stark, daß in diesem Fall keine Selbsthemmung der Kugelrampenkupplung in Verbindung mit dem Kegelsitz gegeben ist.

Dadurch ist eine Verdrehung der Federhülse 14 bei Überwindung des Reibmoments im Kegelsitz und somit des Gewinderohres gegen die Sperrichtung des Freilaufs gegeben.

Diese Anordnung führt gegenüber dem Stand der Technik zu einigen bemerkenswerten Vorteilen.

So wird zunächst eine sehr geringe Anzahl an Einzelteilen benötigt, was zu niedrigen Kosten und einer einfacheren Montage führt.

Die eingesetzten Einzelteile sind zudem derart ausgestaltet, dass sie kostengünstig im wesentlichen durch spanloses Formen herstellbar sind. Sie sind zudem durchweg robust ausgestaltet und daher besonders funktionssicher.

Da sich die Kugeln 12 auf definierten Kugellaufbahnen 24, 25 bewegen, wird ein eindeutiges Funktionsverhalten gewährleistet.

Die Nachstellvorrichtung gewährleistet zudem eine geringe Hysterese im Funktionsverhalten, da alle bewegten Teile kugelgelagert sind.

Aufgrund des großen Rollwinkels der Kugeln 12 kann es zudem nicht zu einem unkontrollierten Überrollen der Kugeln in der Überlastkupplung kommen.

Vorteilhaft ist auch das erreichbare konstante Funktionsverhalten während der gesamten Lebensdauer, da ein eventueller Verschleiß sich kaum auf die Kraftverhältnisse auswirkt.

Als vorteilhaft zu nennen ist schließlich noch die gegebenen große Anpassungsfähigkeit durch vielfältige, individuelle Parametereinstellmöglichkeiten.

### Bezugszeichen

- Spindel: 1
- Antriebszapfen: 2
- Profilierung: 3
- Mitnehmerstern: 4
- Lagerbuchse: 5
- Kugellager: 6
- Lagerscheibe: 7
- Distanzhülse: 8
- Freilauf- und Überlastkupplungseinrichtung: 9
- Kupplungsbuchsen: 10, 11
- Kugeln: 12
- Drehfeder: 13
- Federhülse: 14
- Vorspannfeder: 15
- Endbereich: 16
- Ansatz: 17, 20
- Außenprofilierung: 18, 19
- Bund: 21
- Erstes Wälzlager: 22
- Kegelsitz: 23
- Außenkegel: 24
- Laufbahnen: 25, 26
- Bund: 27

## Patentansprüche

1. Nachstellvorrichtung zum Nachstellen des Reibflächenverschleißes an Bremsbelag und Bremsscheibe einer pneumatisch betätigten Scheibenbremse, die eine drehhebelbetätigte Zuspannvorrichtung aufweist, die vorzugsweise in eine Drehspindel der Schiebenbremse einsetzbar ist, wobei
a) axial beidseits eine Antriebselementes wie einer Schaltgabel (20) jeweils eine Wälzkörperanordnung angeordnet ist, von denen eine als Wälzlager (22) und eine als Kugelrampenkupplung (9) mit Freilauffunktion ausgebildet ist,
b) die Kugelrampenkupplung (9) eine axial zwischen den Wälzkörperanordnungen angeordnete antriebsseitige Kupplungsbuchse (10) und eine abtriebsseitige Kupplungsbuchse (11) sowie Klemmkugeln (12) aufweist,
**dadurch gekennzeichnet, dass**
c) sich die abtriebsseitige Kupplungsbuchse (11) an einer Federhülse (14) für eine Vorspannfeder (15) abstützt, und
d) zwischen der abtriebsseitigen Kupplungsbuchse (11) und der Federhülse (14) ein kupplungsartiger Kegelsitz (23, 24) ausgebildet ist.

2. Nachstellvorrichtung nach Anspruch 1, **dadurch gekennzeichnet, daß** An- und Abtriebsbuchse (10, 11) mit einer Drehfeder (13) gegeneinander verspannt sind,.

3. Nachstellvorrichtung nach einem der vorstehenden Ansprüche, **dadurch gekennzeichnet, daß** die Drehfeder (13) konzentrisch zur An- und zur Abtriebsbuchse (10, 11) angeordnet ist.

4. Nachstellvorrichtung nach einem der vorstehenden Ansprüche, **dadurch gekennzeichnet, daß** die beiden Kupplungsbuchsen (10, 11) im Ruhezustand lastfrei von einer Distanzhülse (8) gehalten sind.

5. Nachstellvorrichtung nach einem der vorstehenden Ansprüche, **dadurch gekennzeichnet, daß** die Länge der Distanzhülse (8) derart bestimmt ist, daß die Kugeln (6) der ersten Wälzkörperanordnung (22) und die Kupplungsbuchsen (10, 11) im Ruhezustand der Nachstellvorrichtung nicht von der Federkraft der Vorspannfeder (15) beaufschlagt werden.

6. Nachstellvorrichtung nach einem der vorstehenden Ansprüche, **dadurch gekennzeichnet, daß** durch die Vorspannfeder (14) eine vorgegebene Ansprechkraft der Kupplungsbuchsen (10, 11) erzeugt wird.

7. Nachstellvorrichtung nach einem der vorstehenden Ansprüche, **dadurch gekennzeichnet, daß** die Lagerung des Nachstellvorrichtung mittels einer kardanisch ausgebildeten Lagerscheibe (7) erfolgt.

8. Nachstellvorrichtung nach einem der vorstehenden Ansprüche, **dadurch gekennzeichnet, daß** das Reibmoment des Kegelsitzes (23, 24) derart gewählt ist, daß im Zusammenspiel mit der Kugelrampengeometrie der beiden Kupplungsbuchsen Selbsthemmung vorhanden ist.

9. Nachstellvorrichtung nach einem der vorstehenden Ansprüche, **dadurch gekennzeichnet, daß** die Freilauffunktion, welche notwendig ist, um den Belagverschleiß auszugleichen, **dadurch** realisiert ist, dass beim Zurückdrehen die Kugeln auf der Rampenkontur der Laufbahnen (24, 25) diese ablaufend bewegt werden und keine Sperrung der Kupplungsbuchsen (10, 11) in Verbindung mit dem Kegelsitz möglich ist.

10. Nachstellvorrichtung nach einem der vorstehenden Ansprüche, **dadurch gekennzeichnet, daß** der Kegelsitz derart ausgelegt und auf die Laufbahnen (25, 26) der Kugelrampenkupplung abgestimmt ist, dass beim Rückdrehen keine Selbsthemmung der Kugelrampenkupplung in Verbindung mit dem Kegelsitz gegeben ist.

## Claims

1. An adjusting device for adjusting the friction face wear on the brake lining and brake disk of a pneumatically actuated disk brake which has a brake application device which is actuated by a rotary lever and can be introduced preferably into a rotary spindle of the disk brake,
a) in each case one rolling body arrangement being arranged axially on both sides of a drive element such as a switching fork (20), of which rolling body arrangements one is configured as a roller bearing (22) and one is configured as a ball ramp coupling (9) with a freewheeling function,
b) the ball ramp coupling (9) having a drive-side coupling bush (10) which is arranged axially between the rolling body arrangements and an output-side coupling bush (11), and wedging balls (12),
**characterized in that**
c) the output-side coupling bush (11) is supported on a spring sleeve (14) for a prestressing spring (15), and
d) a coupling-like conical seat (23, 24) is formed between the output-side coupling bush (11) and the spring sleeve (14).

2. The adjusting device as claimed in claim 1, **characterized in that** the drive bush (10) and the output bush (11) are stressed with respect to one another by way of a torsion spring (13).

3. The adjusting device as claimed in one of the preceding claims, **characterized in that** the torsion spring (13) is arranged concentrically with respect to the drive bush (10) and with respect to the output bush (11).

4. The adjusting device as claimed in one of the preceding claims, **characterized in that** the two coupling bushes (10, 11) are held without load by a spacer sleeve (8) in the rest position.

5. The adjusting device as claimed in one of the preceding claims, **characterized in that** the length of the spacer sleeve (8) is defined in such a way that the balls (6) of the first rolling body arrangements (22) and the coupling bushes (10, 11) are not loaded by the spring force of the prestressing spring (15) in the rest state of the adjusting device.

6. The adjusting device as claimed in one of the preceding claims, **characterized in that** a predefined response force of the coupling bushes (10, 11) is generated by the prestressing spring (14).

7. The adjusting device as claimed in one of the preceding claims, **characterized in that** the adjusting device is mounted by means of a bearing plate (7) of cardanic configuration.

8. The adjusting device as claimed in one of the preceding claims, **characterized in that** the frictional moment of the conical seat (23, 24) is selected in such a way that there is a self-locking action in interaction with the ball ramp geometry of the two coupling bushes.

9. The adjusting device as claimed in one of the preceding claims, **characterized in that** the freewheeling function which is necessary in order to compensate for the lining wear is realized by the fact that, during reversing, the balls are moved on the ramp contour of the raceways (24, 25) so as to run down the latter and no locking of the coupling bushes (10, 11) in conjunction with the conical seat is possible.

10. The adjusting device as claimed in one of the preceding claims, **characterized in that** the conical seat is configured in such a way, and is adapted to the raceways (25, 26) of the ball ramp coupling, that, during reversing, there is no self-locking of the ball ramp coupling in conjunction with the conical seat.

## Revendications

1. Dispositif de réajustage à rattraper l'usure aux surfaces de frottement à la garniture de frein et au disque à frein d'un frein à disque à commande pneumatique, qui comprend un dispositif d'application du frein commandé par un levier tournant, qui est apte à être monté, de préférence, dans une broche rotative, dans lequel
a) un groupe de corps de roulement respectif est disposé, en sens axial, des deux côtés d'un élément entraîneur comme une fourchette d'embrayage (20), dont l'un groupe est configuré sous forme de palier de roulement (22) et un autre est configuré sous forme d'un coupleur à rampe de billes (9) à fonction de roue libre,
b) ledit coupleur à rampe de billes (9) comprend une douille de couplage (10) disposée, en sens axial, entre lesdits groupes de corps de roulement du côté d'entrée et une douille de couplage (11) du côté de sortie, ainsi que des billes de serrage (12),
**caractérisé en ce**
c) **que** ladite douille de couplage (11) du côté de sortie s'appuie à une douille de ressort (14) pour un ressort de précontrainte (15), et
d) **qu'**un logement conique (23, 24) du type de coupleur est formé entre ladite douille de couplage (11) du côté de sortie et ladite douille de ressort (14).

2. Dispositif de réajustage selon la revendication 1, **caractérisé en ce que** lesdites douilles d'entrée et de sortie (10, 11) sont serrées l'une relativement à l'autre moyennant un ressort de torsion (13).

3. Dispositif de réajustage selon une quelconque des revendications précédentes, **caractérisé en ce que** ledit ressort de torsion (13) est disposé en arrangement concentrique relatif auxdites douilles d'entrée et de sortie (10, 11).

4. Dispositif de réajustage selon une quelconque des revendications précédentes, **caractérisé en ce qu'**en état de repos, lesdites deux douilles de couplage (10, 11) sont tenues sans charge par une douille d'écartement (8).

5. Dispositif de réajustage selon une quelconque des revendications précédentes, **caractérisé en ce que** la longueur de ladite douille d'écartement (8) est définie d'une telle façon, qu'en état de repos du dispositif de réajustage, lesdites billes (6) du premier groupe de corps de roulement (22) et lesdites douilles de couplage (10, 11) ne soient pas assujetties à l'effort de ressort dudit ressort de précontrainte (15).

6. Dispositif de réajustage selon une quelconque des revendications précédentes, **caractérisé en ce que** ledit ressort de précontrainte (14) sert à engendre un effort de réponse prédéterminé desdites douilles de couplage (10, 11).

7. Dispositif de réajustage selon une quelconque des revendications précédentes, **caractérisé en ce que** le logement du dispositif de réajustage se fait moyennant un disque de logement (7) à formation à Cardan.

8. Dispositif de réajustage selon une quelconque des revendications précédentes, **caractérisé en ce que** le moment de frottement dudit logement conique (23, 24) est choisi d'une telle manière, qu'il y ait un blocage automatique par l'action concourante avec la géométrie des rampes à billes desdites deux douilles de couplage.

9. Dispositif de réajustage selon une quelconque des revendications précédentes, **caractérisé en ce que** la fonction de roue libre, qui est nécessaire afin de compenser l'usure de la garniture, est réalisée par la mesure, qu'au cas de rotation en retour, les billes se déplacent en descente le long du contour de la rampe des surfaces de roulement (24, 25) et qu'un blocage desdites douilles de couplage (10, 11) en combinaison avec ledit logement conique n'est pas possible.

10. Dispositif de réajustage selon une quelconque des revendications précédentes, **caractérisé en ce que** ledit logement conique est conçu et coordonné avec les surfaces de roulement (25, 26) du coupleur à rampe de billes d'une telle manière, qu'au cas de rotation en retour, il n'y ait pas un blocage automatique du coupleur à rampe de billes en combinaison avec ledit logement conique.
